# EUROPEAN PATENT APPLICATION

(11) **EP 2 915 727 A1**
(43) Date of publication of application: **09.09.2015**
(21) Application number: 14749393.6
(22) Date of filing: 11.02.2014
(51) Int. Cl.: B62D 61/12, B60G 11/46

(54) **DEVICE FOR LIFTING AN AXLE OF A VEHICLE**

(30) Priority: 11.02.2013 ES 201330170
(71) Applicant: Accesorios y Elevadores Valencia S.L., 46530 Puzol (Valencia) (ES)
(72) Inventor: MORENO IBAÑEZ, Alberto, E-46530 Puzol (ES)
(74) Representative: Isern-Jara, Nuria
(86) International application number: PCT/ES2014/070097
(87) International publication number: WO 2014/122355

(57) **Abstract**

The invention relates to a device for lifting an axle of a vehicle, connecting the support of the suspension to the suspension arm for lifting or lowering an axle of a vehicle. The lifting device is formed by a lower support, an upper support, an intermediate support and a supporting bar which, using an oval-shaped longitudinal groove located on the intermediate support and aligned openings located on the lower support, allows the use thereof in the different variants of a suspension model that has anchoring openings on the sides of the supports of the suspension.

## Description

### Object of the invention

The object of the present invention is a lifting device suitable for being fixed to the suspension support of a vehicle when it is not possible to access the suspension bolt as a result of interferences in the structure of the suspension itself.

Another object of the invention is offering various angular positions and height positions for positioning on the suspension support, relative to the suspension arm, with the aim of it being possible to use the same lifting device in different embodiments of a suspension model of a vehicle with anchoring openings in the sides of the suspension supports.

### Background of the invention

Pneumatic suspension has been in use in motor vehicles since the 1950s, particularly in busses and lorries. This type of suspension largely contributes towards improving bus passenger comfort, whilst preventing the mechanics in lorries from wearing.

In lorries with a trailer or semitrailer, pneumatic suspension has been especially introduced in the heavy load portion used to transport goods.

These vehicles may incorporate lifted axles, said axles being lifted when the vehicle's load does not exceed a predetermined amount and being lowered when the load exceeds this amount or when the driver so wishes. The advantages, inter alia, of driving with fewer axles are reduced wear of the tyres, not only in terms of lifted axles but also in terms of the rest of the axles, in addition to improved manoeuvrability of the vehicle. Axles are lifted and lowered by means of lifting devices, which are actuated either pneumatically, hydraulically or manually and which are controlled either manually or by means of electronic devices.

Lifting devices are usually installed by coupling the lifter to the suspension bolt and supporting it on the lower portion of the suspension support.

Nevertheless, this type of installation is disadvantageous in that it establishes a rigid join system between the lifting device and the suspension support, which thereby prevents relative movement between both elements, in addition to making it necessary for the lifting device not to be released from the support of the suspension, since this could cause serious accidents upon hitting elements of the vehicle itself or of other vehicles.

Another limitation is that, since these lifting devices are usually mounted once the vehicle has been built, easy access to the support of the suspension is required, which on many occasions does not happen. Furthermore, it is necessary to dismount the suspension in order to access the suspension bolt, which in turn requires a specialised labour force and gives rise to long mounting times, both of which increase the cost of mounting.

There are two different kinds of lifting device, which are more than well known in the state of the art. The first kind comprises a lower support, which is connected to the suspension bolt and supported at the top on the lower portion of the support of the suspension, to which a spring is connected, which in turn is joined to the suspension arm. The second kind is similar to the first, but the spring is not joined to the suspension arm and is rather connected to an upper support, which rotates in relation to an axle located at the point where said upper support is connected to the lower support, where, in the upper portion of said upper support, a pusher is arranged, which comes into contact with the suspension arm.

The invention object of the present description resolves the abovementioned limitations, offering a solution that may be adapted to the different types of suspension model with anchoring openings in the sides of the suspension support, which is not fixed to the suspension bolt and which is supplied already mounted with its corresponding screws not tightened, it only being necessary for the operator to select the positions of the screws in the aligned openings arranged respectively on the lower support and on the intermediate supports that shall be described below.

### Invention description

The device for lifting an axle of a vehicle is of the variety that connect the suspension support to the suspension arm of the axle of a vehicle by means of a spring or inflatable pneumatic cushion, so as to lift it or lower it at the user's will.

The lifting device object of the present description comprises:
- A lower support, which comprises two L-shaped plates joined at the ends of one of the arms of the L by a lower anchoring of the spring, which is substantially flat, where, at one end of the other arm of the L of each plate, an upper opening joined to the oval-shaped longitudinal grooves in a fixed manner is arranged, connected in an articulated manner to the end openings of the upper support, while on the other arm of each L, a series of substantially aligned openings are arranged, one of said substantially aligned openings being connected in a fixed manner to the supporting opening of the intermediate support and to the connecting means of the supporting bar.
- Two intermediate supports in the form of substantially flat L-shaped plates, on each one of the intermediate supports, are suitably provided with a fastening opening in one of their ends, which is connected in a fixed manner to the support of the suspension, in addition to being provided with another supporting opening on the vertex and another end opening, which has an oval-shaped longitudinal groove, the longitudinal axle of which is substantially parallel to the arm of the L upon which it is arranged.
- An upper support comprising two metal L-shaped plates joined at one of their ends by means of an anchoring of the substantially flat pusher and joined at their vertex by means of an upper anchoring of the substantially flat spring, where an upper opening is arranged at the other ends of each plate.
- A supporting bar, the cross-section of which is substantially square in shape and which has connecting means arranged at its edges, said supporting bar having an upper U-shaped fastening protrusion in its outer portion, which is inserted in a fixed manner into a groove made in the support of the suspension.
- Removable connection elements between the above described elements, which in a preferred embodiment, constitute screws and their corresponding nuts and washers.
- Articulated connection elements, which facilitate the relative rotation of the upper support in relation to the intermediate support and lower support, which, in a preferred embodiment, constitute sockets mounted on the screws.

### Description of the drawings

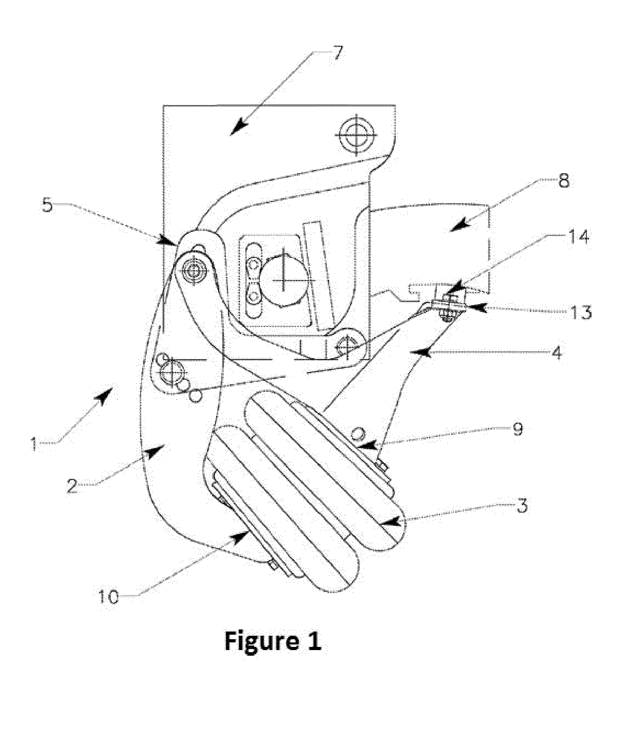

Figure 1 is a side view of the lifting device.

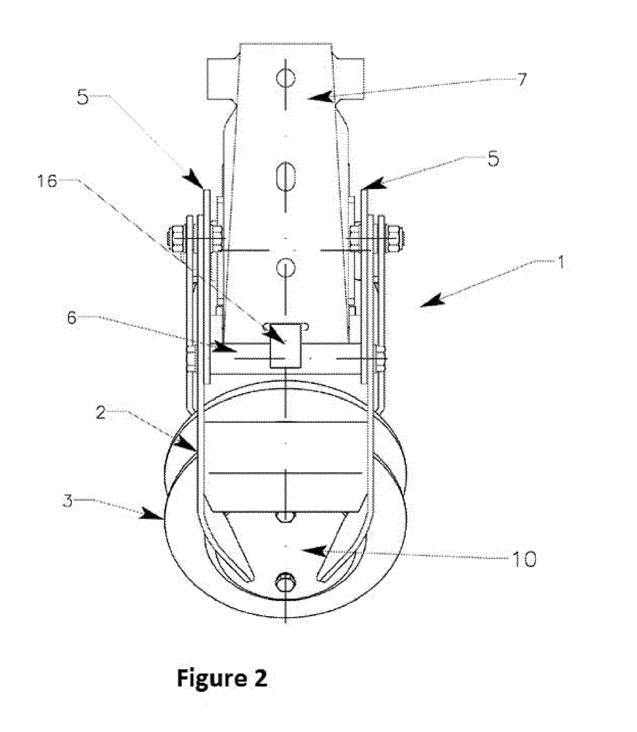

Figure 2 is a front view of the lifting device.

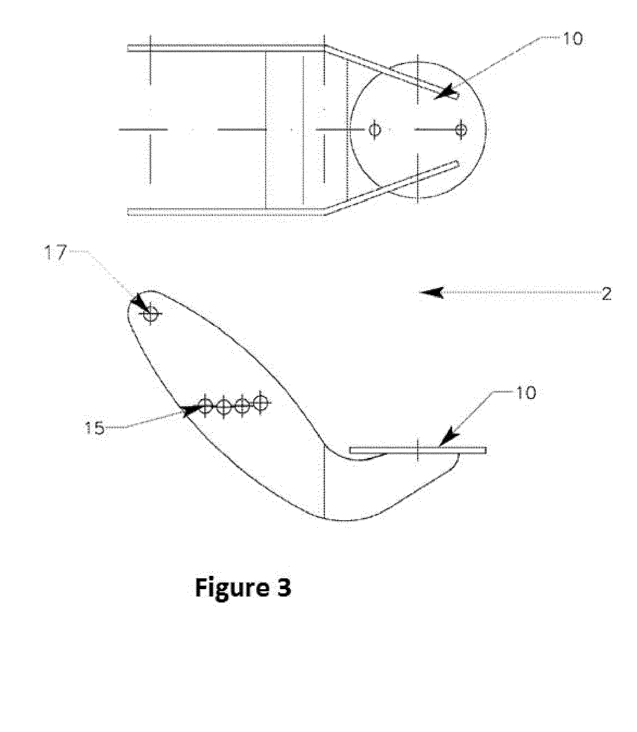

Figure 3 is a plan elevation view of the lower support.

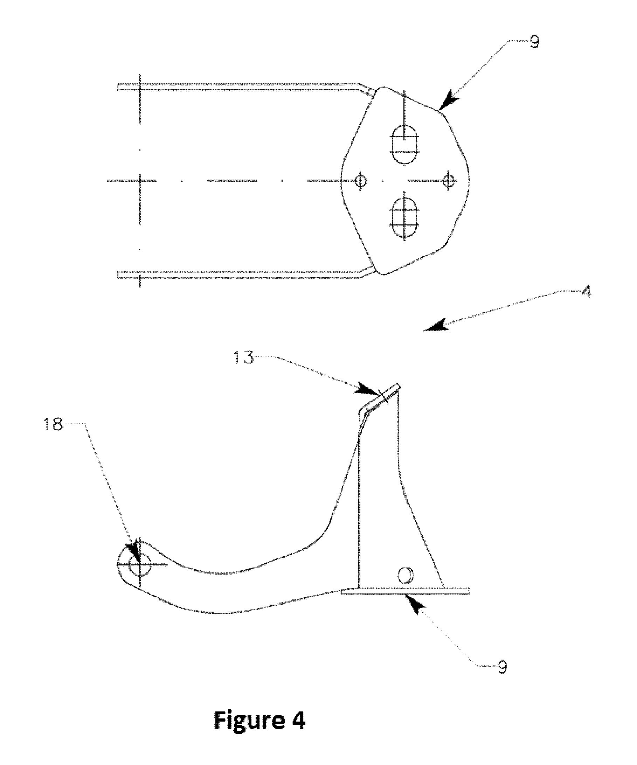

Figure 4 is a plan elevation view of the upper support.

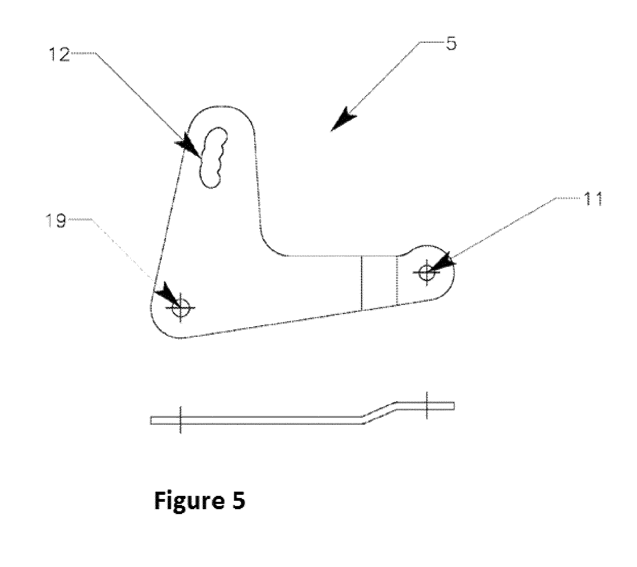

Figure 5 is a plan elevation view of the intermediate support.

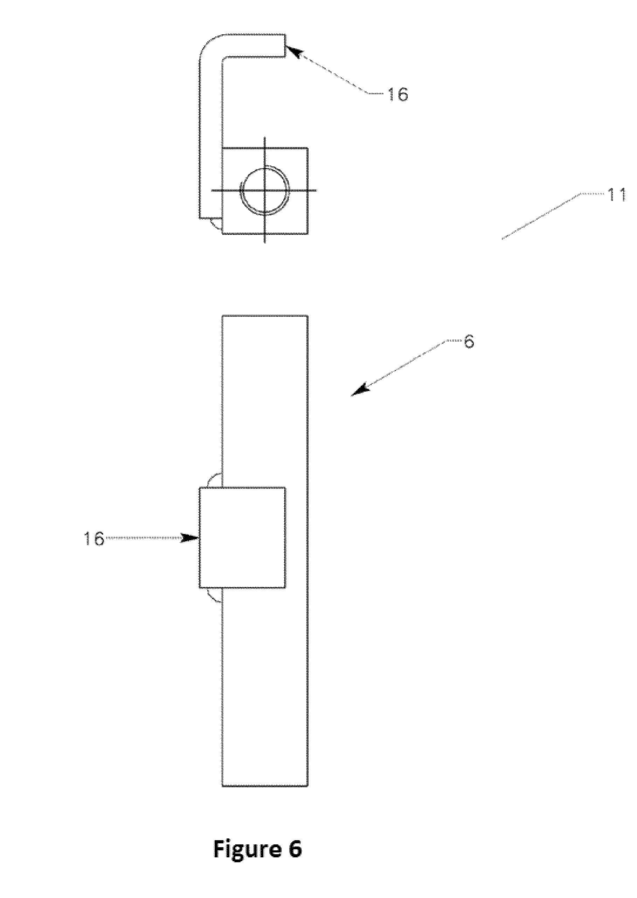

Figure 6 is an upper elevation view of the supporting bar.

### List of references:

1. Lifting device
2. Lower support
3. Spring
4. Upper support
5. Intermediate support
6. Supporting bar
7. Support of the suspension
8. Suspension arm
9. Upper anchoring of the spring
10. Lower anchoring of the spring
11. End opening
12. Oval-shaped longitudinal groove
13. Anchoring of the pusher
14. Pusher
15. Substantially aligned openings
16. Upper protrusion
17. End opening
18. Articulation opening
19. Vertex opening

### Preferred embodiment of the invention

A preferred embodiment of the device for lifting an axle of a vehicle is shown in the figures accompanying the present description.

The lifting device (1) mechanically connects the support of the suspension (7) to the suspension arm (8) and, by means of inflating or deflating the spring (3), lifts or lowers the suspension arm (8) using its own weight, thereby also lifting or lowering the axle of the vehicle.

In order to lift or facilitate the lowering of the axle, the lifting device must have at least one fixed element relative to the support of the suspension (7), where, in the case of the present invention, the fixed elements are the intermediate support (5) and the lower support (2). It must also have a mobile element, which in this case is the upper support (4), which, upon increasing the length of the spring, rotates around an axle that coincides with the point at which said upper support is connected to the intermediate support, which is the articulation opening (18), and by means of the pusher (14) lifts or enables the lowering of the suspension arm.

In order to enable the lifting device to adapt to the different variations of a suspension model, it is provided that the intermediate support is fixed to the suspension support by means of screws, which pass through the end opening (11) made in one of the ends thereof and of the upper protrusion (16) of the supporting bar (6), which is introduced into a groove provided for in the support of the suspension, said supporting bar being connected by means of screws that pass through the vertex opening (19) arranged on the vertex of the intermediate support and one of the substantially aligned openings (15) arranged on the lower support. The relative position of the lifting device with respect to the support of the suspension is regulated by means of selecting one of the substantially aligned openings, made in the lower support, said selection implying that the screws housed in the oval-shaped grooves, which act as a connection between the lower support and the intermediate support and as an articulated connection between the upper support, slide in said oval-shaped grooves, thereby making it possible to select the relative position of said lower support and of the lifter, in relation to the support of the suspension.

According to the description given above, a device for lifting the axle of a vehicle that can adapt to different variations of a suspension model is obtained, which has anchoring openings in the sides of the suspension supports, thereby ensuring permanent fixation to the support of the suspension and in turn preventing it from being released accidentally, and the relative position of the invention in relation to the support of the suspension and as such, to the suspension arm and to the axle of the vehicle.

The lifting device is supplied assembled with all of its screws, nuts, washers and sockets and only requires the operator to select the position of the intermediate support and to select which of the aligned openings must be used, in addition to tightening the screws until they are tightened to the recommended level.

## Claims

1. A device for lifting an axle of a vehicle, of the variety that mechanically connect the suspension support to the suspension arm of the axle of a vehicle by means of a spring or inflatable pneumatic cushion, so as to lift it or lower it at the user's will, **characterised in that** it comprises the following elements:
• a lower support, which comprises two L-shaped plates joined at the ends of one of the arms of the L by a lower anchoring of the spring, which is substantially flat, where, at one end of the other arm of the L of each plate, an upper opening joined to the oval-shaped longitudinal grooves in a fixed manner is arranged, connected in an articulated manner to the end openings of the upper support, while on the other arm of each L, a series of substantially aligned openings are arranged, one of said substantially aligned openings being connected in a fixed manner to the supporting opening of the intermediate support and to the connecting means of the supporting bar;
• two intermediate supports in the form of substantially flat L-shaped plates, on each one of the intermediate supports, suitably provided with a fastening opening in one of their ends, which is connected in a fixed manner to the support of the suspension, in addition to being provided with another supporting opening on the vertex and another end opening, which has an oval-shaped longitudinal groove, the longitudinal axle of which is substantially parallel to the arm of the L upon which it is arranged;
• an upper support comprising two metal L-shaped plates joined at one of their ends by means of an anchoring of the substantially flat pusher and joined at their vertex by means of an upper anchoring of the substantially flat spring, where an upper opening is arranged at the other ends of each plate;
• a supporting bar, the cross-section of which is substantially square in shape and which has connecting means arranged at its edges, said supporting bar having an upper U-shaped fastening protrusion in its outer portion, which is inserted in a fixed manner into a groove made in the support of the suspension;
• removable connection elements between the above-described elements and
• articulated connection elements, which facilitate the relative rotation of the upper support in relation to the intermediate support and lower support.

2. The device for lifting an axle of a vehicle according to claim 1, **characterised in that** the connecting elements are screws with their corresponding accessories.

3. The device for lifting an axle of a vehicle according to claim 2, **characterised in that** the articulated connecting elements are sockets mounted on the screws.
